# NEUE EUROPÄISCHE PATENTSCHRIFT

(11) **EP 0 338 123 B2**
(45) Veröffentlichungstag und Bekanntmachung des Hinweises auf die Entscheidung über den Einspruch: **21.11.2001**
(45) Hinweis auf die Patenterteilung: 03.02.1993
(21) Anmeldenummer: 88119273.6
(22) Anmeldetag: 19.11.1988
(51) Int. Cl.: G07D 7/00, G06K 7/14

(54) **Einrichtung zum Erkennnen von Dokumenten**
Device for verifying documents
Dispositif pour la reconnaissance de documents

(30) Priorität: 18.04.1988 CH 141388
(43) Veröffentlichungstag der Anmeldung: 25.10.1989
(73) Patentinhaber: MARS, INCORPORATED, McLean, Virginia 22101-3883 (US)
(72) Erfinder: Bercovitz, Christian, F-74380 Bonne (FR); Feyjoo, Alexandre, CH-1220 Avanchet-Parc (CH)
(74) Vertreter: Musker, David Charles

(56) Entgegenhaltungen:
- EP-A- 0 109 490
- EP-B- 0 021 093
- DE-A- 2 729 830
- DE-A- 2 824 849
- DE-C- 2 760 165
- DE-C- 2 947 958
- GB-A- 1 385 181
- US-A- 3 122 227
- US-A- 4 197 584
- US-A- 4 298 807
- US-A- 4 567 370
- Unterlagen zu einer behaupteten offenkundigen Vorbenutzung durch Fa. Armatic AB, Kopperberg (SE).

## Beschreibung

Die Erfindung bezieht sich auf eine Einrichtung der im Oberbegriff des Patentanspruches 1 genannten Art, wie sie insbesondere bei Banknotenakzeptoren verwendet werden.

Einrichtungen zum automatischen Erkennen von echten und falschen Dokumenten messen vom Dokument zurückgeworfenes oder durch das Dokument durchscheinendes Licht mittels einer vorbestimmten Anzahl von Photoelementen, wobei das Dokument nur in einzelnen vorbestimmten Punkten oder in einem bestimmten Punktraster optisch abgetastet wird. Die Dokumente werden auch mittels spektral eng begrenzter Lichtquellen beleuchtet, um farbliche Differenzierungen auf der Oberfläche der Dokumente, z. B. der aufgedruckten Muster, maschinell zu erkennen (CH-PS 573 634).

Eine aus der DE-OS 29 47 958 bekannte Einrichtung weist einen auswechselbaren Lesekopf auf, der eine zeilenförmige Anordnung der Photoelemente und eine einseitig angebrachte, in den Lesekopf integrierte, lineare Beleuchtungseinrichtung besitzt, wobei weisses Licht von einer Quelle ausserhalb des Lesekopfes mittels eines Lichtleiterbündels zugeführt wird.

Die Verwendung von Licht aus einem engen Spektralbereich zum Untersuchen von Banknoten ist aus der US-PS 3 122 227 bekannt. Die Banknoten werden mit weissem Licht bestrahlt und das von der Banknote reflektierte bzw. das durch die Banknote scheinende Licht wird von Photozellen registriert, wobei das Licht mittels eines vor jeder Photozelle angeordneten optischen Filters auf den vorbestimmten Spektralbereich begrenzt wird.

Die US-PS 3,872,434 zeigt eine Anordnung zum Umwandeln der vielen, der Anzahl der Photoelemente entsprechenden Analogsignale mittels eines Multiplexers und eines einzigen Analog-Digital-Wandlers. Die DE-OS 30 40 963 beschreibt die Auswertung der umgewandelten digitalen Signale, der Vergleich mit gespeicherten Werten und die Identifizierung des Dokumentes sowie die Erzeugung eines Signales zur Steuerung der Sortier- und Fördereinrichtung für die Dokumente.

Aus der DE-A-27 29 830 sind steckbare, standardisierte Sensoren zur Prüfung von Banknoten bekannt.

Der Erfindung liegt die Aufgabe zugrunde, eine Einrichtung zum Erkennen der Echtheit von Dokumenten zu schaffen, die einen den zu erkennenden Dokumenten leicht anpassbaren Lesekopf aufweist, der sich durch einen kostengünstigen, einfachen Aufbau und grosse Reparaturfreundlichkeit auszeichnet.

Die Lösung der Aufgabe gelingt durch die kennzeichnenden Merkmale des Anspruchs 1.

Nachfolgend werden Ausführungsbeispiele der Erfindung anhand der Zeichnung näher erläutert.

Es zeigen
- Figur 1:: Eine Einrichtung zum Erkennen der Echtheit von Dokumenten mit einem aus gleichartigen Modulen zusammengesetzten Lesekopf,
- Figur 2:: ein Modul in der steckerseitigen Ansicht,
- Figur 3:: das Modul im Querschnitt und
- Figur 4:: eine elektronische Schaltung des Moduls,

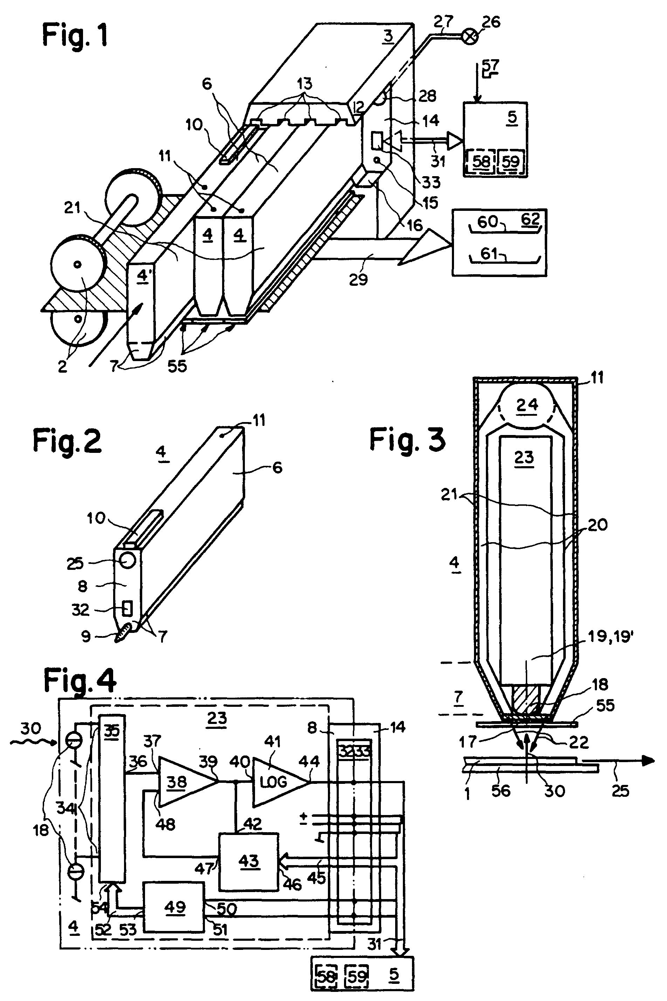

In der Figur 1 wird ein Dokument 1 mittels einer durch Rollenpaare symbolisch dargestellten Transportvorrichtung 2 unter einem optischen Lesekopf vorbeigezogen. Der Lesekopf besteht aus einer Anschlussplatte 3 und aus wenigstens zwei steckbar mit der Anschlussplatte 3 verbundenen, gleichartigen Modulen 4. Die Module 4 sind parallel nebeneinander angeordnet und tasten optisch das unter dem Lesekopf vorbeigezogene Dokument 1 ab. Eines der Module 4 ist in der Zeichnung mit 4' bezeichnet und beim Einsetzen in einen Steckplatz dargestellt. Typischerweise weist die Anschlussplatte 3 vier Steckplätze auf. Die Anzahl der zum Erkennen der Echtheit des Dokumentes 1 benutzten eingesteckten Module 4 ist vorbestimmt und hängt von der Art der zu erkennenden Dokumente 1 ab. Eine elektronische Auswertevorrichtung 5 überprüft, ob jedes der benötigten Module 4 eingesteckt ist. Vorteilhaft werden zwei bis vier Module 4 verwendet, wobei jedes Modul 4 das Dokument 1 in einem durch die Farbgebung des Dokumentes 1 vorbestimmten Spektralbereich abtastet und seine Messwerte der Auswertevorrichtung 5 übermittelt. Je nach der gestellten Aufgabe können einzelne der gesteckten Module 4 bei vorbestimmten Auswertungsschritten übergangen werden. Jedes dieser Module 4 ist gleichartig aufgebaut und alle besitzen gleichartige Gehäuse 6.

In einer Ausführung gemäss der Figur 2 weist das Gehäuse 6 einen prismatisch profilierten Querschnitt auf. Das Gehäuse 6 verjüngt sich in einem dem Dokument 1 zugewandten unteren Teil 7, wie dies bei einem Blick auf eine Rückwand 8 zu erkennen ist. Aus der Rückwand 8 ragt beispielsweise in der unteren Hälfte ein parallel zur Längsachse des Gehäuses 6 angeordneter kegelförmiger Dorn 9 vor. Eine Schiene 10 zieht sich auf einer Oberseite 11 des Gehäuses 6 parallel zur Längsachse des Gehäuses 6 von der Rückwand 8 bis etwa zur halben Länge des Moduls 4 hin.

Die Steckplätze der Anschlussplatte 3 (Figur 1 und 2) werden nach oben von einem gemeinsamen, vorspringenden Arm 12 abgedeckt. In einer den Steckplätzen zugewandten Unterseite des Arms 12 ist auf jeden Steckplatz zuführend eine Nute 13 für die Schiene 10 eingelassen. Jeder Steckplatz ist in der Tiefe durch eine Steckerplatte 14 mit einem Führungsloch 15 für den Dorn 9 begrenzt. Nach unten ist jeder Steckplatz mittels einer U-förmigen Wanne 16 abgeschlossen, die sich an jedem Steckplatz der Anschlussplatte 3 gegen den Arm 12 öffnet und dem unteren Teil 7 des Gehäuses 6 angepasst ist. Der Arm 12, die Steckerplatte 14 und die Wanne 16 umfassen das Gehäuse 6 des Moduls 4 in der Nähe der Rückwand 8 derart, dass das in die Anschlussplatte 3 eingesteckte Modul 4 eine einzig mögliche, vorbestimmte Lage einnimmt.

Der keilförmig sich verjüngende untere Teil 7 (Figur 1 und 3) des Moduls 4 ist auf seiner dem Dokument 1 zugewandten Schmalseite teilweise mit einem Lesefenster 17 abgeschlossen. Es bestimmt die optisch empfindliche Länge des Moduls 4, die sich im wesentlichen aus der Länge des Moduls 4 abzüglich eines von der Wanne 16 abgedeckten Teilstückes des Gehäuses 6 ergibt.

Auf der ganzen optisch empfindlichen Länge ist innerhalb des Gehäuses 6 (Figur 3) unmittelbar hinter dem Lesefenster 17 eine Vielzahl von in einer ebenen Zeile angeordneten, optisch das Dokument 1 abtastenden Photosensoren 18 angeordnet. Jeder Photosensor 18 weist eine optische Achse 19 auf. Die Achsen 19 sind senkrecht auf die Ebene des Dokumentes 1 ausgerichtet und bestimmen eine Detektorebene 19'. Optische Leiter 20, die im Gehäuse 6 von der Oberseite 11 her kommen und an Längswänden 21 des Gehäuses 6 von innen eng anliegen, führen Licht symmetrisch zur Detektorebene 19' bis zum Lesefenster 17. Die optischen Leiter 20 sind im unteren Teil 7 unter einem Winkel von etwa 30° gegen die Detektorebene 19' hingebogen, damit sich die aus den optischen Leitern 20 über das ganze Lesefenster 17 gleichmässig verteilt austretenden, konvergierenden Lichtbündel, die durch Pfeile 22 angedeutet sind, auf dem Dokument 1 in einer gedachten Schnittlinie zwischen der Detektorebene 19' und dem Dokument 1 schneiden. Zwischen den beiden Ebenen mit den optischen Leitern 20 und unmittelbar hinter der Zeile der Photosensoren 18 ist eine elektronische Schaltung 23 angeordnet.

In einer Ausführung der Module 4 vereinigen sich die optischen Leiter 20 in einem Kanal zwischen der Schaltung 23 und der Oberseite 11 des Gehäuses 6 zu einem Faserbündel 24. Das Faserbündel 24 ist zur Rückwand 8 (Figur 2) in einen optischen Konnektor 25 geführt. Von einer Lichtquelle 26 (Figur 1) hinter der Anschlussplatte 3 gelangt Licht vorteilhaft mittels Lichtleiter 27 zu einem in der Steckerplatte 14 montierten Gegenstück 28, das zusammen mit dem Konnektor 25 eine Steckkupplung 25, 28 bildet. Eine aus den Teilen 20 und 24 bis 28 gebildete Beleuchtungsvorrichtung setzt vorteilhaft die von der Lichtquelle 26 erzeugte Wärme nicht in den Modulen 4 frei, sondern an einer dazu geeigneten Stelle der Einrichtung, und beeinflusst daher die Arbeitskennlinien der Photosensoren 18 (Figur 3) und der elektronischen Schaltung 23 nicht.

Anstatt Fasern können andere Arten von optischen Leitern 20 verwendet werden. Beispielsweise sind auch plattenförmige, in die beiden Längswände 21 integrierte optische Leiter 20 denkbar. Als Materialien für die optischen Leiter 20 eignen sich Glas und vorteilhaft auch Kunststoffe, wie z. B. Polycarbonat oder Polymethylmethacrilat.

Das von den optischen Leitern 20 durch die Module 4 zugeführte Licht leuchtet das Dokument 1 unter jedem Modul 4 auf einem etwa 3 mm bis 5 mm breiten, quer zu einer mit einem Richtungsweiser 29 angedeuteten Transportrichtung orientierten Streifen des Dokumentes 1 gleichmässig aus. Reflektiertes Licht 30 gelangt in die Photosensoren 18, welche das eindringende Licht 30 in elektrische, seiner Intensität entsprechende Analogsignale umwandeln.

Jedes Modul 4 (Figur 4) ist mittels einer möglichst kleinen Anzahl elektrischer Leiter 31 mit der Auswertevorrichtung 5 verbunden, wobei einige der elektrischen Leiter 31 der elektronischen Schaltung 23 und den Photosensoren 18 Energie und ein Bezugspotential zuführen. Die elektronische Schaltung 23 verstärkt die Analogsignale der Photosensoren 18 und leitet diese Analogsignale in einer vorbestimmten Reihenfolge zur Auswertevorrichtung 5. Die elektrischen Leiter 31 sind trennbar mit der Auswertevorrichtung 5 verbunden, wobei jedes Modul 4 auf der Rückwand 8 einen Stecker 32 und die Steckerplatte 14 an jedem Steckplatz eine Steckdose 33 aufweist, die einen Steckverbinder 32, 33 bilden.

In einer ersten Ausführung der Schaltung 23 ist jeder Photosensor 18 direkt mit je einem Analogeingang 34 eines Multiplexers 35 verbunden. Die Anzahl Photosensoren 18 beträgt vorteilhaft ein ganzzahliges, der Einteilung der Multiplexer 35 entsprechendes Vielfaches von beispielsweise 16. Ein Analogausgang 36 des Multiplexers 35 ist zu einem Verstärkereingang 37 eines Verstärkers 38 geführt. Von einem Verstärkerausgang 39 führt eine Verbindung sowohl zu einem Eingang 40 eines logarithmischen Verstärkers 41 als auch zu einem Signaleingang 42 einer Steuerschaltung 43. Ein Ausgang 44 des logarithmischen Verstärkers 41 ist auf einen Stift des Steckers 32 in der Rückwand 8 geführt. Ein Datenbus 45 leitet digitale Kontrollzahlen von der Auswertevorrichtung 5 über eine Steckverbindung 32, 33 zu Steuereingängen 46 der Steuerschaltung 43, deren einer Signalausgang 47 mit einem Regeleingang 48 des Verstärkers 38 verbunden ist. Zwei der elektrischen Leiter 31 führen von der Auswertevorrichtung 5 zu einem Adresserzeuger 49, wobei der erste Leiter mit einem Reseteingang 50 und der zweite mit einem Takteingang 51 des Adresserzeugers 49 verbunden ist. Adressleitungen 52 verbinden Adressausgänge 53 des Adresserzeugers 49 mit Adresseingängen 54 des Multiplexers 35.

Beim Einschieben in den Steckplatz wird das Modul 4 (Figuren 1 und 2) zunächst mittels der Schiene 10 und der Nute 13 geführt. Sobald die Wanne 16 beim Einfahren des Moduls 4 dessen unteren Teil 7 aufnimmt, wird das Gehäuse 6 so genau gegen die Steckerplatte 14 gelenkt, dass die Spitze des kegelförmigen Dorns 9 in das Führungsloch 15 eindringen kann und dass dadurch sowohl der Konnektor 25 auf das Gegenstück 28 als auch der Stecker 32 auf die Steckdose 33 exakt zum Einschieben ausgerichtet werden. Beide Steckverbinder 25, 28 und 32, 33 sind eingerastet, wenn das Modul 4 eine vorbestimmte Endlage im Steckplatz erreicht hat. Eine zusätzliche, hier nicht gezeigte Verriegelung hält vorteilhaft das Modul 4 an seinem durch Führungsmittel 7, 16 bzw. 9, 15 bzw. 10, 13 vorbestimmten Ort unverrückbar in der Anschlussplatte 3 fest.

Die Photosensoren 18 (Figur 1 und 3) haben eine breite spektrale Empfindlichkeit und wandeln das reflektierte Licht 30 aus dem ganzen sichtbaren und dem nahen infraroten Spektralbereich in elektrische Analogsignale um. Da die Dokumente 1 meist mit verschiedenen Farben bedruckt sind, sind Mittel vorgesehen, die die spektrale Empfindlichkeit der Module 4 auf einen schmalen Bereich des Spektrums einschränken, um die Farben des Dokumentes 1 mit der Einrichtung erkennen zu können.

Weist die Beleuchtungsvorrichtung eine Lichtquelle 26 (Figur 1 und 3) mit weissem Licht auf, beispielsweise eine Halogenlampe, so engen verschiedene optische Filter 55, die vor jedem Lesefenster 17 angeordnet und unabhängig vom Modul 4 an der Anschlussplatte 3 angebracht sind, die spektrale Empfindlichkeit der Module 4 ein. Sowohl das von den optischen Leitern 20 ausgesandte weisse Licht auf dem Wege zum Dokument 1 als auch das reflektierte Licht 30 müssen den Filter 55 durchdringen. Bei dieser Anordnung wird Streulicht aus einem anderen Spektralbereich vorteilhaft ausgefiltert, das sonst in das Lesefenster 17 eindringen und die Analogsignale der Photosensoren 18 verfälschen könnte.

In einer anderen Ausführung der Beleuchtungsvorrichtung befindet sich der Filter 55 beispielsweise zwischen dem Gegenstück 28 und der Lichtquelle 26 oder jeder Steckplatz weist eine unabhängige, einfarbige Lichtquelle 26 mit einem vorbestimmten engen Spektralbereich auf, wie z. B. Leuchtdioden.

Die als Mittel zum Bestimmen der spektralen Empfindlichkeit der Module 4 dienenden Filter 55 bzw. Lichtquellen 26 sind von den Modulen 4 unabhängig und ausserhalb derselben angebracht. Die Gehäuse 6 weisen eine gleichartige Formgebung auf. Daher lässt sich insbesondere jedes dieser Module 4 in jedem der Steckplätze einschieben und betreiben und die Austauschbarkeit der Module 4 ist gewährleistet. Dies ist für Wartungsarbeiten der Einrichtung zum Erkennen der Echtheit von Dokumenten 1, die Lagerhaltung und eine kostengünstige Fabrikation der Module 4 besonders vorteilhaft.

Die Mittel zum Bestimmen der spektralen Empfindlichkeit sind leicht auswechselbar. Kenngrössen der Filter 55, wie Durchlassbreite und Lage der grössten Transmission, sind von der gestellten Aufgabe abhängig und lassen sich optimal an einen Satz zu erkennender Dokumente 1 anpassen.

Das Dokument 1 wird von der Transportvorrichtung 2 über eine Platte 56 (Figur 3) gezogen. Die Platte 56 weist im Bereich der Module 4 eine vorbestimmte Reflektivität zum Eichen der Empfindlichkeiten der einzelnen Photosensoren 18 auf. Diese Eichung erfolgt durch Messen der Intensität des reflektierten Lichtes der Lichtquelle 26 mittels der Photosensoren 18 beispielsweise kurz vor dem Einfahren des Dokumentes 1 unter dem erstem Modul 4 des Lesekopfes.

Die Auswertevorrichtung 5 (Figur 1) steuert mittels der Transportvorrichtung 2 das Dokument 1 schrittweise oder kontinuierlich längs des Richtungsweisers 29 unter dem Lesekopf durch. Ein von der Transportvorrichtung 2 erzeugtes, dem Vorschub des Dokumentes 1 entsprechendes Schrittsignal 57 löst in der Auswertevorrichtung 5 ein Resetsignal und eine Folge von Taktsignalen aus, die in jedem der Module 4 über einen der elektrischen Leiter 31 (Figur 4) zum Adresserzeuger 49 gelangen,

Die Module 4 tasten mittels der Photosensoren 18 zeilenweise das unter ihnen durchtransportierte Dokument 1 (Figur 1) in verschiedenen vorbestimmten Spektralbereichen quer zur Transportrichtung ab und leiten die Messwerte zur Auswertevorrichtung 5 weiter. Die Synchronisation der Auswertevorrichtung 5 mit der Transportvorrichtung 2 mittels des Schrittsignals 57 ermöglicht, jedem der mittels der Module 4 abgelesenen zeilenförmigen Ausschnitte des Dokumentes 1 seine Lage auf dem Dokument 1 eindeutig zuzuordnen.

In einer Ausführung enthält der Adresserzeuger 49 einen hier nicht gezeigten Zähler. Das Resetsignal am Reseteingang 50 stellt den Zähler auf Null zurück. Der Zähler registriert anschliessend die Folge von Taktsignalen am Takteingang 51 und gibt den Zählerstand über die Adressleitungen 52 als digitales Signal zum Multiplexer 35. Das digitale Signal an den Adresseingängen 54 bestimmt, welcher der Photosensoren 18 mittels des Multiplexers 35 auf den Verstärkereingang 37 geschaltet ist.

Jede Kontrollzahl ist einem der Photosensoren 18 des Lesekopfes zugeordnet. Die Auswertevorrichtung 5 ruft die Kontrollzahl, die dem augenblicklich mit dem Verstärker 38 verbundenen Photosensor 18 zugeordnet ist, aus einem hier nicht gezeigten Speicher der Auswertevorrichtung 5 ab und leitet sie über den Datenbus 45 zu den Steuereingängen 46. Die Steuerschaltung 43 regelt mittels der Kontrollzahl die Verstärkung im Rückkopplungszweig 39, 42, 43, 47, 48 und damit die Verstärkung des Verstärkers 38. Diese Einrichtung gleicht die unterschiedlichen Empfindlichkeiten der Photosensoren 18 jedes der Module 4 aus. In einer Ausführung mit grosser Lesegeschwindigkeit wird nur eine einzige Kontrollzahl für ein ganzes Modul 4 ermittelt, die nur die unterschiedliche Empfindlichkeit der Photosensoren 18 des Moduls 4 in den verschiedenen Spektralbereichen ausgleicht. Beispielsweise vermag eine derartige Einrichtung typisch 5 Banknoten pro Sekunde zu prüfen und zu sortieren.

Die Kontrollzahlen werden beispielsweise bei jeder Eichung der Empfindlichkeit der Photosensoren 18 frisch erzeugt und in der Auswertevorrichtung 5 gespeichert.

Ein von der Empfindlichkeit der Photosensoren 18 unabhängiges Analogsignal wird logarithmiert, z. B. im logarithmischen Verstärker 41, und zur Auswertevorrichtung 5 geleitet. In der Auswertevorrichtung 5 wird das Analogsignal digitalisiert, und das Ergebnis in einem dem Modul 4, dem Schrittsignal 57 und dem Photosensor 18 zugeordneten Platz eines Lesespeichers 58 abgelegt. Nachdem das Dokument 1 unter dem Lesekopf mittels der Transportvorrichtung 2 durchgezogen worden ist, enthält der Lesespeicher 58 digitale Abbilder des Dokumentes 1 aus den durch die genannten Mittel vorbestimmten Spektralbereichen. In einem Referenzspeicher 59 sind für alle Sätze der zu erkennenden Dokumente 1 Vorlagewerte für die verschiedenen Spektralbereiche gespeichert. Alle Abbilder werden mit den entsprechenden Vorlagewerten verglichen und für jeden Satz der Vorlagewerte ein Korrelationswert auf bekannte Weise berechnet.

Der maximale Korrelationswert, der jedoch einen minimalen Wert von beispielsweise 0,6 aufweisen muss, bestimmt, welchem der vorgegebenen Dokumentenmuster das unbekannte, gelesene Dokument 1 entspricht. Wird der minimale Wert nicht erreicht, weist die Auswertevorrichtung 5 (Figur 1) das Dokument 1 als unecht bzw. nicht zu den akzeptierbaren Dokumenten 1 gehörig zurück und steuert mittels einer aus einem nicht gezeigten Teil der Transportvorrichtung 2, einer Ausgabeschale 60 und einer Kasse 61 bestehenden Sortiervorrichtung 62 das zurückgewiesene Dokument 1 in die Ausgabeschale 60. Die angenommenen Dokumente 1 werden in die Kasse 61 transportiert und gleichzeitig wird eine Kennzahl des angenommenen Dokumentes 1 an einem hier nicht gezeigten Ausgang der Auswertevorrichtung 5 ausgegeben.

Die Sätze der Vorlagewerte können beispielsweise durch das Einlesen verschiedener Dokumente 1 in den praktisch möglichen Orientierungen durch die Auswertevorrichtung 5 selbst erzeugt werden. Eine laufende Anpassung der zutreffenden Vorlagewerte im Referenzspeicher 60 mittels einer gewichteten Mittelwertbildung aus den alten Vorlagewerten und den die Abbilder angenommener Dokumente 1 darstellenden Messwerten aus dem Lesespeicher 59 korrigiert vorteilhaft die kleinen Abweichungen zwischen verschiedenen Druckauflagen eines Dokumentes 1 oder innerhalb einer Gruppe verschieden stark abgenutzter und gealterter Exemplare eines Dokumentes 1 aus, beispielsweise bei Banknoten.

Andere Ausführungen dieser Schaltung 23 (Figur 4) sind für einen Fachmann leicht ableitbar. Beispielsweise kann in einer zweiten Ausführung der Schaltung 23 ein hier nicht gezeigter Analog-Digital-Wandler statt in der Auswertevorrichtung 5 für alle Module 4 gemeinsam auch in jedem Modul 4 zwischen dem Ausgang 44 und dem Stecker 32 eingeschaltet werden. Der Analog-Digital-Wandler erzeugt ein dem Analogsignal am Ausgang 44 entsprechendes digitales Signal, z. B. als ein 8-Bit-Wort. Die digitalen Signale werden über einen zusätzlichen hier nicht gezeigten Signalbus der Auswertevorrichtung 5 über den Steckverbinder 32, 33 zugeführt. Gegenüber der ersten Ausführung mit einer Uebertragung des Analogsignals wirkt sich vorteilhaft die höhere Störsicherheit einer Uebertragung von digitalen Signalen in den elektrischen Leitern 31 zur Auswertevorrichtung 5 aus.

Die Art der Photosensoren 18 und der Abstand ihrer optischen Achsen 19 bestimmen das Auflösungsvermögen des Lesekopfes. In einer Ausführung mit PIN-Dioden als Photosensoren 18 (vom Typ BPW 13C) und mit einem senkrechten Abstand zwischen den Photosensoren 18 und dem Dokument 1 von etwa 5 mm erfasst jeder Photosensor 18 das reflektierte Licht 30 aus einer quadratischen Fläche, einem sogenannten Pixel, von etwa 3,1 mm Seitenlänge. 32 dieser Photosensoren 18 genügen für eine optisch empfindliche Länge des Moduls 4 von 100 mm. Vorteilhaft für die Verarbeitungsgeschwindigkeit werden die digitalen Bauelemente der HCMOS-Baureihe, wie z. B. für den Adresserzeuger 49, verwendet. Als Verstärker 38, 41 sind die Schaltungen LF 411 von National Semiconductor für den linearen bzw. LOG 100 von Burr-Brown für den logarithmischen Verstärker eingesetzt. Für die Steuerschaltung 43 eignet sich ein LF 13006 (digital gain set) von National Semiconductor und für den Multiplexer 35 ein MUX 16 (analog-multiplexer) von Precision Monolitics Inc. ein.

In einer Ausführung des Lesekopfes 3, 4 (Figur 1) mit vier Modulen 4 engen die einfarbigen Lichtquellen 26 oder die optischen Filter 55 die spektrale Empfindlichkeit eines jeden Moduls 4 auf einen Bereich im infraroten Licht bei etwa 1,2 µm oder 0,9 µm Wellenlänge, im roten, im grünen oder im blauen Licht ein.

In einer anderen Ausführung kann vorteilhaft für jedes Modul 4 auch eine Kombination von einer einfarbigen Lichtquelle 26 mit einem nur für deren Licht transparenten Filter 55 verwendet werden, wobei sich das Filter 55 zur Abschirmung von Streulicht zwischen dem Modul 4 und dem zu lesenden Dokument 1 befindet.

## Patentansprüche

1. Einrichtung zum Erkennen der Echtheit von Dokumenten. (1), bestehend aus einem Lesekopf (3, 4, 4') mit in einer Zeile angeordneten, das Dokument (1) zeilenweise optisch abtastenden Photosensoren (18), einer Beleuchtungsvorrichtung mit mindestens einer Lichtquelle (26), einer elektronischen Auswertevorrichtung (5) zum Korrelieren der von den Photosensoren (18) aufgenommenen Signale mit gespeicherten Vorlagewerten, einer Transportvorrichtung (2) zum Erzeugen einer Relativbewegung zwischen Dokument (1) und Lesekopf (3, 4, 4') und einer von der Auswertevorrichtung (5) in Abhängigkeit des Korrelationswertes gesteuerten Sortiervorrichtung (62),
**dadurch gekennzeichnet,**
**daß** der Lesekopf (3, 4, 4') mindestens zwei gleichartige, mit je einer Zeile von Photosensoren (18) versehene Module (4; 4') aufweist, die so auf einen Anschluß (3) aufsteckbar sind, daß sie sich parallel nebeneinander mit im Abstand voneinander angeordneten optischen Achsen (19, 19') befinden, und die das Dokument (1) jeweils in einem vorbestimmten Spektralbereich abtasten, der je durch den Spektralbereich begrenzende Mittel bestimmt ist, und
**daß** elektrische Leiter (31) zwischen jedem Modul (4, 4') und der Auswertevorrichtung (5) mittels eines Steckers (32) und einer Steckdose (33) steckbar miteinander verbunden sind und optische Leiter in jedem Modul (4; 4') und Lichtleiter (27) mittels eines optischen Konnektors (25) und dessen Gegenstücks(28) steckbar miteinander verbunden sind.

2. Einrichtung nach Anspruch 1,
**dadurch gekennzeichnet,**
**daß** optische Filter (55) als den Spektralbereich begrenzende Mittel verwendet und zwischen den jeweiligen Modulen (4) und dem Dokument (1) angeordnet sind.

3. Einrichtung nach Anspruch 1, **dadurch gekennzeichnet, dass** jedes Modul (4, 4') beidseits und symmetrisch zur Zeile der Photosensoren (18) angeordnete optische Leiter (20) zur Beleuchtung des Dokumentes (1) auf weist und dass die optischen Achsen (19) der Photosensoren (18) senkrecht zur Ebene des Dokumentes (1) ausgerichtet sind.

4. Einrichtung nach einem der vorangehenden Ansprüche, **dadurch gekennzeichnet, dass** sie eine Anschlussplatte (3) des Lesekopfes (3, 4, 4') mit Steckplätzen für die Module (4; 4') enthält, dass die Anschlussplatte (3) und jedes Modul (4; 4') an jedem Steckplatz Führungsmittel (7, 16; 9, 15; 10, 13) zum reproduzierbaren Einstecken des Moduls (4; 4') in eine vorbestimmte Lage sowie Steckverbinder (25, 28; 32, 33) aufweist, die jedes Modul (4; 4') mittels optischer und elektrischer Leiter (20; 27; 31) trennbar mit der Lichtquelle (26) und mit der Auswertevorrichtung (5) verbindet, und dass die Steckverbinder (25, 27; 32, 33) beim durch die Führungsmittel (7, 16; 9, 15; 10, 13) geführten Einschieben eines Moduls (4; 4') in den Lesekopf (3, 4, 4') selbsttätig einrastbar sind, wobei die Endlage des Moduls (4; 4') durch die Steckverbinder (25, 27; 32, 33) vorbestimmt ist.

5. Einrichtung nach einem der vorangehenden Ansprüche, **dadurch gekennzeichnet, dass** jedes Modul (4) wenigstens einen im Modul (4) mit den Photosensoren (18) verbundenen Multiplexer (35) zur Reduktion der Anzahl zur Auswertevorrichtung (5) führenden elektrischen Leiter (31) aufweist.

6. Einrichtung nach Anspruch 5, **dadurch gekennzeichnet, dass** jedes Modul (4) wenigstens einen Verstärker (38; 41) mit einstellbarer logarithmischer Verstärkung enthält, dessen Verstärkungsfaktor von der Auswertevorrichtung (5) zum Ausgleich unterschiedlicher Empfindlichkeiten der verschiedenen Module (4) einstellbar ist.

7. Einrichtung nach einem der Anspräche 5 und 6, **dadurch gekennzeichnet, dass** jedes Modul (4) wenigstens einen von der Auswertevorrichtung (5) gesteuerten Analog-Digital-Wandler enthält.

8. Einrichtung nach einem der vorangehenden Ansprüche, **dadurch gekennzeichnet, dass** vor mindestens einem der Module (4) auf der dem Dokument (1) zugewandten Seite ein optisches Filter (55) angeordnet ist, wobei auf das Dokument (1) einfallendes und von ihm reflektiertes Licht (30) das Filter (55) durchdringt.

9. Einrichtung nach Anspruch 8, **dadurch gekennzeichnet, dass** die Filter (55) auswechselbar sind.

10. Einrichtung nach einem der vorangehenden Ansprüche, **dadurch gekennzeichnet, dass** durch die Steckverbinder (25, 27) in das Modul (4) gespeistes Licht einen für jedes Modul (4) vorbestimnten Spektralbereich aufweist.

11. Einrichtung nach einem der vorangehenden Ansprüche, **dadurch gekennzeichnet, dass** die Auswertevorrichtung (5) von der Transportvorrichtung (2) mittels eines Schrittsignals (57) auf die Transportgeschwindigkeit des Dokumentes (1) synchronisierbar ist und dass das Dokument (1) kontinuierlich unter den Modulen (4) durchtransportierbar und mittels der Module (4) zeilenweise lesbar ist.

## Claims

1. Apparatus for recognising the authenticity of documents (1), consisting of a reading head (3, 4, 4') having photosensors (18) which are arranged in a line and which optically scan the document (1) in a line-wise manner, an illumination device having at least one light source (26), an electronic evaluation device (5) for correlating the signals received from the photosensors (18) with stored master values, a transport device (2) for producing a relative movement between document (1) and reading head (3, 4, 4'), and a sorting device (62) which is controlled by the evaluation device (5) in dependence on the correlation value,
**characterised in that**
the reading head (3, 4, 4') has at least two modules (4; 4') of the same kind which are each provided with a line of photosensors (18) and which can be plugged onto a connection (3) in such a manner that they are disposed in parallel side-by-side relationship with optical axes (19, 19') arranged at a spacing from one another and which each scan the document (1) in a respective predetermined spectral range which is determined by means that limit the spectral range, and
electrical conductors (31) between each module (4, 4') and the evaluation device (5) are plug-in connected by means of a plug (32) and a socket (33), and optical conductors in each module (4; 4') and light guides (27) are plug-in connected by means of an optical connector (25) and its co-operating part (28).

2. Apparatus according to claim 1, **characterised in that** optical filters (55) are used as means that limit the spectral range and are arranged between the respective modules (4) and the document (1).

3. Apparatus according to claim 1, **characterised in that** each module (4, 4') has optical conductors (20) for illuminating the document (1) which are arranged on both sides and symmetrically with respect to the line of photosensors (18), and the optical axes (19) of the photosensors (18) are oriented perpendicularly to the plane of the document (1).

4. Apparatus according to any one of the preceding claims, **characterised in that** it includes a connection plate (3) of the reading head (3, 4, 4') with plug-in locations for the modules (4; 4'), the connection plate (3) and each module (4; 4') has at each plug-in location guide means (7, 16; 9, 15; 10, 13) for reproducibly plugging the module (4; 4') into a predetermined position and plug connectors (25, 28; 32, 33) which detachably connect each module (4; 4') to the light source (26) and to the evaluation device (5) by means of optical and electrical conductors (20; 27; 31), and the plug connectors (25, 27; 32, 33) are automatically engageable when a module (4; 4') is inserted into the reading head (3, 4, 4') while being guided by the guide means (7, 16; 9, 15; 10, 13), the end position of the module (4; 4') being predetermined by the plug connectors (25, 27; 32, 33).

5. Apparatus according to any one of the preceding claims, **characterised in that** each module (4) has at least one multiplexer (35) which is connected in the module (4) to the photosensors (18), for reducing the number of electrical conductors (31) leading to the evaluation device (5).

6. Apparatus according to claim 5, **characterised in that** each module (4) has at least one amplifier (38; 41) with adjustable logarithmic gain, the gain factor of which is adjustable by the evaluation device (5) to compensate for different levels of sensitivity of the various modules (4).

7. Apparatus according to one of claims 5 and 6, **characterised in that** each module (4) includes at least one analogue-to-digital converter which is controlled by the evaluation device (5).

8. Apparatus according to any one of the preceding claims, **characterised in that** an optical filter (55) is arranged in front of at least one of the modules (4) on the side towards the document (1), wherein light (30) which is incident on the document (1) and which is reflected therefrom passes through the filter (55).

9. Apparatus according to claim 8, **characterised in that** the filters (55) are interchangeable.

10. Apparatus according to any one of the preceding claims, **characterised in that** light which is fed into the module (4) through the plug connectors (25, 27) has a predetermined spectral range for each module (4).

11. Apparatus according to any one of the preceding claims, **characterised in that** the evaluation device (5) can be synchronised to the transportation speed of the document (1) by the transport device (2) by means of a stepping signal (57), and the document (1) can be continuously transported through the apparatus under the modules (4) and read line-wise by means of the modules (4).

## Revendications

1. Dispositif de reconnaissance de l'authenticité de documents (1), comprenant une tête de lecture (3,4,4') comportant des photodétecteurs (18) disposés dans une ligne et explorant optiquement le document (1) ligne par ligne, un dispositif d'éclairement pourvu d'au moins une source lumineuse (26), un dispositif électronique d'évaluation (5) pour établir une corrélation entre les signaux reçus en provenance des photodétecteurs (18) et des valeurs de référence mémorisées, un dispositif transporteur (2) pour produire un mouvement relatif entre le document (1) et la tête de lecture (3,4,4') et un dispositif de triage (62) commandé par le dispositif d'évaluation (5) en fonction de la valeur de corrélation, **caractérisé en ce que**
la tête de lecture (3,4,4') comporte au moins deux modules identiques (4;4') comprenant chacun une ligne de photodétecteurs (18) et qui peuvent être enfichés sur un raccord (3) de telle sorte qu'ils soient disposés parallèlement l'un à côté de l'autre avec des axes optiques (19,19') espacés l'un de l'autre et qui explorent le document (1) respectivement dans un domaine spectral prédéterminé, qui est défini respectivement par des moyens délimitant le domaine spectral; et
des conducteurs électriques (31) sont reliés par enfichage entre chaque module (4,4') et le dispositif d'évaluation (5) au moyen d'une fiche (32) et d'une douille d'enfichage (33) et les conducteurs optiques (20) prévus dans chaque module (4,4') et les conducteurs de lumière (27) sont reliés par enfichage au moyen d'un connecteur optique (25) et de sa partie antagoniste (28).

2. Dispositif selon la revendication 1, **caractérisé en ce que** des filtres optiques (55) sont utilisés comme moyens délimitant le domaine spectral et sont disposés entre les modules correspondants (4) et le document (1).

3. Dispositif selon la revendication 1, **caractérisé en ce que** chaque module (4,4') comporte des conducteurs optiques (20), disposés des deux côtés symétriquement par rapport à la ligne des photodétecteurs (18) pour éclairer le document (1) et **en ce que** les axes optiques des photodétecteurs (18) sont orientés perpendiculairement au plan du document (1).

4. Dispositif selon l'une des revendications précédentes, **caractérisé en ce qu'**il comporte une plaque de liaison (3) de la tête de lecture (3,4;4'), comportant des emplacements d'enfichage pour les modules (4;4'), **en ce que** la plaque de liaison (3) et chaque module (4;4') comportent, en chaque emplacement d'enfichage, des moyens de guidage (7, 16;9,15;10,13) pour un enfichage reproductible du module (4;4') dans une position prédéterminée ainsi que des connecteurs d'enfichage (25,28;32,33), qui relient chaque module (4;4'), au moyen de conducteurs optiques et électriques (30;37;31) de façon séparable à la source lumineuse (26) et au dispositif d'évaluation (5), et **en ce que** les connecteurs d'enfichage (25,27;32,33) peuvent être bloqués automatiquement lors de l'engagement, guidé par les moyens de guidage (7,16;9,15;10,13) dans la tête de lecture (3,4,4'), la position finale du module (4;4') étant prédéterminée par les connecteurs d'enfichage (25,27;32,33).

5. Dispositif selon l'une des revendications précédentes, **caractérisé en ce que** chaque module (4) comporte au moins un multiplexeur (35), relié dans le module (4) aux photodétecteurs (18), en vue d'une réduction du nombre de conducteurs électriques (31) aboutissant au dispositif d'évaluation (5).

6. Dispositif selon la revendication 5, **caractérisé en ce que** chaque module (4) comporte au moins un amplificateur (38,41), avec amplification logarithmique réglable et dont le facteur d'amplification est réglable par le dispositif d'évaluation (5) en vue d'une égalisation de sensibilités différentes des divers modules (4).

7. Dispositif selon une des revendications 5 et 6, **caractérisé en ce que** chaque module (4) comporte au moins un convertisseur analogique-numérique commandé par le dispositif d'évaluation (5).

8. Dispositif selon une des revendications précédentes, **caractérisé en ce qu'**il est prévu, avant au moins un des modules (4), sur le côté dirigé vers le document (1), un filtre optique (55), qui est traversé par la lumière (30) arrivant sur le document (1) et réfléchie par lui.

9. Dispositif selon la revendication 8, **caractérisé en ce que** les filtres (55) sont remplaçables.

10. Dispositif selon une des revendications précédentes, **caractérisé en ce que** la lumière introduite par les connecteurs enfichables (25,27) dans le module (4) a un domaine spectral prédéterminé pour chaque module (4).

11. Dispositif selon une des revendications précédentes, **caractérisé en ce que** le dispositif d'évaluation (5) peut être synchronisé sur la vitesse de transport du document (1) par le dispositif transporteur (2) au moyen d'un signal d'avancement progressif (57) et **en ce que** le document (1) peut être transporté de façon continue en-dessous des modules (4) et peut être lu ligne par ligne au moyen des modules (4).
